# EUROPÄISCHE PATENTANMELDUNG

(11) **EP 3 263 918 A1**
(43) Veröffentlichungstag der Anmeldung: **03.01.2018**
(21) Anmeldenummer: 17176752.8
(22) Anmeldetag: 20.06.2017
(51) Int. Cl.: F16B 5/01, F16B 37/04, F16B 37/12

(54) **LEICHTBAUBEFESTIGER MIT DRAHTGEWINDEMUTTER**

(30) Priorität: 29.06.2016 DE 102016111933
(71) Anmelder: SFS Intec Holding AG, 9435 Heerbrugg (CH)
(72) Erfinder: COSTABEL, Sascha, 71083 Herrenberg (DE)

(57) **Zusammenfassung**

Ein Leichtbaubefestiger umfasst einen Gewindekörper (31) mit mindestens einer Drehmomentstütze (32,33), ein Gehäuse, das den Gewindekörper (31) zumindest teilweise aufnimmt und ein Lager für mindestens eine Drehmomentstütze (32,33). Als Gewindekörper (31) wird gemäss der Erfindung eine Drahtmutter oder Drahtgewindemutter (30) verwendet. So ein Leichtbaubefestiger findet Anwendung in Clips bzw. Inserts, Befestigungselementen, die vor allem im Innenausbau von Fahrzeugen und Flugzeugen Verwendung finden.

## Beschreibung

Die vorliegende Erfindung befasst sich mit Befestigungseinrichtungen, die in der Industrie als Clip bzw. Insert bezeichnet werden. Diese gehören zur Gruppe der Leichtbaubefestiger und finden im Fahrzeugbau und der Flugzeugindustrie Verwendung.

### HINTERGRUND

Im Fahrzeugbau wie in der Luftfahrtindustrie werden Befestigungselemente z.B. für Verkleidungen eingesetzt, die spezielle Anforderungen erfüllen müssen. Um spanende Verarbeitungsschritte bei der Endmontage zu vermeiden, werden z.B. plattenförmige Elemente vorgebohrt und vor der Endmontage mit Clips bzw. Inserts versehen, die elastische oder mit Spiel angebrachte weitere Verschraubungselemente bzw. Schnapphalterungen aufweisen. In diese Verschraubungselemente bzw. Schnapphalterungen greifen bei der Endmontage dann die Verbinder zu anderen Verkleidungselementen bzw. strukturell tragenden Elementen ein. Die plattenförmigen Elemente sind hierbei häufig Leichtbauwandelemente bzw. Sandwichpanels, die aus Gewichtsgründen zumeist aus zwei Kunststoff-Aussenlagen bestehen, welche mit einer wabenförmigen Aussteifung dazwischen verklebt sind.

Clips können beispielsweise als zweischenklige Halterungen, wie. in DE 10 2015 009 643 gezeigt, ausgeführt werden, die gleichzeitig eine Verdrehsicherheit bieten. Inserts werden zumeist als Ganzes in Sacklöchern oberflächenbündig verankert und bilden so einen Verankerungspunkt.

### STAND DER TECHNIK

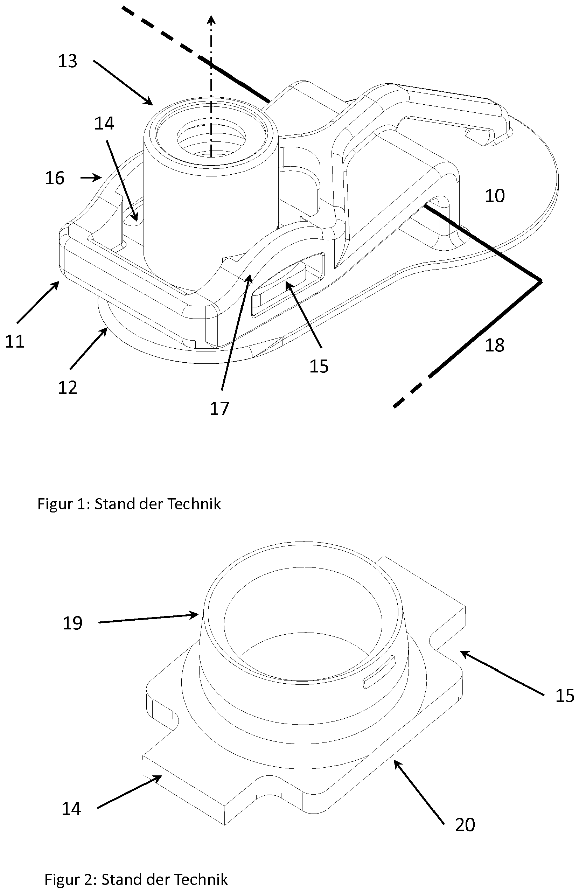

Die in DE 10 2015 009 643 gezeigten Clips (siehe Fig. 1) weisen eine Konstruktion auf mit einem ersten Schenkel 11 und einem zweiten Schenkel 12. Zur Montage wird der Clip auf eine Platte (nur angedeutet, 18) aufgeschoben, so dass das Befestigungselement 13 über einer vorbereiteten Öffnung in der Platte (in Figur 1 verdeckt) liegt. Dieses Befestigungselement 13 weist zwei Nasenvorsprünge auf 14, 15, die in je einem Käfig bzw. Rahmen 16, 17 gehalten werden. Die Rahmen sind so ausgeführt, dass das Befestigungselement 13 seitliches Spiel hat, aber aus dem Clip nicht herausfallen kann. Ein Befestiger wird - in der Figur 1 von unten - durch die Platte geführt und erlaubt so das Verbinden der Platte 18 mit einem anderen Element. Diese Art von Clipbefestigern gibt es in vielen Varianten mit unterschiedlichen Schenkellängen, Formen und für verschiedene Plattenstärken.

Figur 2 zeigt den grundsätzlichen Aufbau eines solchen Befestigungselementes 13. Eine plattenförmige Basis 20 dient als Auflage und überträgt im verbauten Zustand die Festhaltekräfte auf den Clip. Die beiden Vorsprünge 14 und 15 dienen der Fixierung im Clip und als Drehmomentstütze. Der zylinderförmige Abschnitt 19 bildet die Aufnahme für den Befestiger.

Das Befestigungselement 13 kann hierbei in vielen Varianten ausgeführt werden, als lösbare oder unlösbare Einrastverbindung mit einer festen oder mehreren Raststufen. Weiterhin kann der zylinderförmige Abschnitt 19 ein Innengewinde aufweisen für eine Schraube. Eine Schraubverbindung hat hierbei den Vorteil der Lösbarkeit und die Möglichkeit der Anzugsmomentkontrolle.

Das Befestigungselement kann je nach Einsatzprofil aus Metall oder Kunststoff gefertigt werden. Wenn hohe Festigkeiten gefordert sind, ist Metall bevorzugt, stellt aber bei der Herstellung eine Herausforderung dar. Als Dreh/Frästeil sind sehr hohe Herstellkosten zu erwarten. In einem Mehrstufen-Umformprozess lässt sich so ein Befestigungselement ebenfalls aus Draht, Bandmaterial oder Blech fertigen, durchläuft dabei aber ebenfalls eine Vielzahl von Arbeitsgängen und muss anschliessend evtl. einer Wärmebehandlung unterworfen werden.

### DARSTELLUNG DER ERFINDUNG

Die vorliegende Erfindung hat zum Ziel, die oben genannten Nachteile des Standes der Technik zu verringern und insbesondere ein fertigungstechnisch einfaches Leichtbaubefestigungselement aufzuzeigen. In allgemeinster Form beschreibt Anspruch 1 einen solchen Leichtbaubefestiger. Die abhängigen Ansprüche beschreiben nützliche Varianten und Erweiterungen.

Im Grundsatz wird vorgeschlagen, statt des komplex geformten Befestigungselementes aus umgeformtem oder zerspantem Material eine Drahtmutter bzw. Drahtgewindemutter zu verwenden. In einer bevorzugten Ausführungsform weist die Drahtmutter unterbrechungsfrei aus Draht geformte Ansätze auf, die die Funktion der Drehmomentstütze übernehmen.

Verallgemeinert formuliert, beschreibt die Erfindung einen Leichtbaubefestiger mit einem Gewindekörper mit mindestens einer Drehmomentstütze, ferner einem Gehäuse, das den Gewindekörper zumindest teilweise aufnimmt und ein Lager für die mindestens eine Drehmomentstütze aufweist und als Gewindekörper eine Drahtmutter oder Drahtgewindemutter verwendet.

Im Folgenden soll die Drahtgewindemutter und deren Einsatzmöglichkeiten im Kontext der Erfindung anhand der Zeichnungen erläutert werden. Die für das Befestigungselement bzw. die Drahtmutter oder Drahtgewindemutter jeweils beschriebenen Merkmale und Vorzüge gelten somit direkt und sinngemäss für den Leichtbaubefestiger. Dieser Leichtbaubefestiger ist in vielen Varianten einsetzbar. Die Beschreibung unten bezieht sich schwerpunktmässig auf Inserts bzw. Clips als zwei bekannte, exemplarische Anwendungsbeispiele. Dies sei aber nicht limitierend verstanden, die Anwendbarkeit eines Leichtbaubefestigers ist nicht auf diese Bauformen beschränkt

Figur 1 zeigt einen Clip mit einem Clipkörper 10 mit zwei Schenkeln 11, 12 zum Aufstecken / Aufschieben auf eine Platte 18, wobei einer der Schenkel Mittel aufweist zur Aufnahme eines Befestigungselementes 13, das wiederum zur Aufnahme eines Befestigers ausgelegt ist.
Das Befestigungselement 13 weist hierbei eine Drahtmutter bzw. ein Drahtmuttergewinde 30 auf. Die Mittel zur Aufnahme bzw. das Lager für die Drehmomentstütze sind hierbei Rahmen bzw. Käfig 16, 17 wie in Figur 1 gezeigt oder funktionell äquivalente Vorrichtungen wir Haltebügel, Ösen oder ähnliches. Der Käfig 16, 17 entspricht also funktionell dem Gehäuse des Leichtbaubefestigers, bzw. der Leichtbaubefestiger ist Bestandteil eines der Schenkel des Clipkörpers.

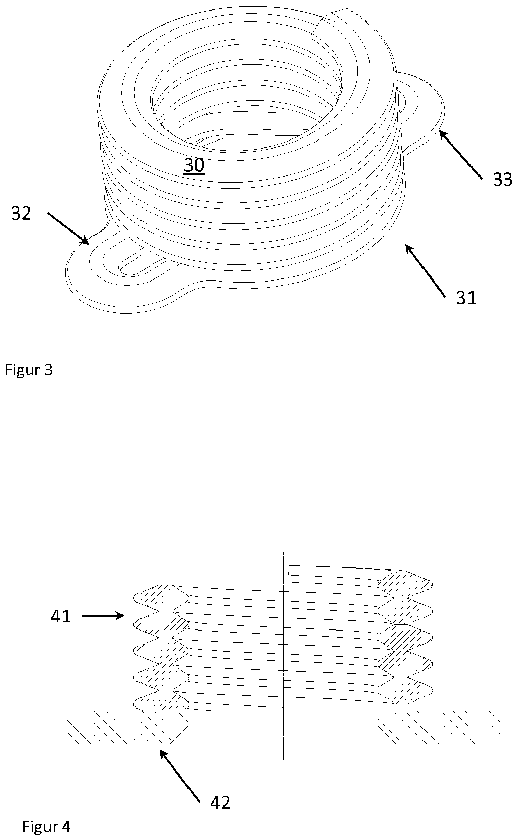

Figur 3 zeigt eine gemäss der Erfindung ausgebildete Drahtmutter oder Drahtgewindemutter 30. Sie besteht aus einem spiralig aus Draht gewickelten Gewindeteil 31 sowie zwei aus der Drahtspirale heraus angeformten Flügeln 32, 33, die mittels Schleifen aus Draht gebildet sind. Diese Schleifen übernehmen die Funktion der Drehmomentstütze. Der Draht wird bevorzugt ein kantiges Querschnittsprofil aufweisen, was in dem spiralig gewickelten Gewindeteil dazu führt, dass Gewindeflanken und Gewindespitzen ausgebildet werden. Wie in Figur 3 gezeigt, kann der Draht einen bevorzugt annähernd rautenförmigen Querschnitt mit abgeflachten Kanten haben, was die Stabilität des resultierenden Drahtmuttergewindes verbessert.

Die Anzahl der Flügel 32, 33, die mittels Schleifen aus Draht gebildet werden, kann varüeren. Wenn die Anforderungen an die Drehmomentübertragung höher sind, können statt zwei auch drei (e.g. um 120° versetzt) oder vier (e.g. um je 90°versetzt) Drahtschleifen 32 gebildet werden.
Sind die Anforderungen weniger kritisch wäre auch denkbar, nur eine Schleife 32 zu bilden und die Drahtmutter am übrigen Umfang in einer Art köcherförmigen Halterung bzw. niedrigen Hülse mit radialem Spiel zu führen. Die Schleife würde z.B. durch eine Aussparung aus dem Köcher/Hülse herausragen, was auch eine eindeutige Orientierung der Drahtgewindemutter erlaubt.

Die Dimensionierung des Drahtes und der Winkel beim Wickeln der Drahtmutter legt die Gewindekenngrössen fest. Je nach Bedarf können so zöllige oder metrische Gewinde mit unterschiedlichen Durchmessern und Steigungen gefertigt werden. Aus konstruktiven Gründen wird man bevorzugt den Draht so auslegen, das sich die Lagen im Gewindeteil 31 direkt berühren, bevorzugt an den abgeflachten Kantenbereichen des rautenförmigen Querschnitts. Damit kann die Federwirkung beim Einschrauben eines Befestigers eingestellt werden. Eine federnde Schraubensicherung lässt eine hohe Zahl an Schraubzyklen zu und erlaubt es, den Einsatz von Schmierhilfsmitteln bei der Montage zu verringern.

Die Länge eines solchen Gewindes kann unterschiedlich ausgelegt werden, bevorzugt so, dass ein späterer Befestiger im Endeinbauzustand vollständig umschlossen und so die Festhaltekräfte optimiert sind ist. Die Länge des Gewindes kann bei der Herstellung sehr genau gesteuert werden, der Materialeinsatz wird dadurch optimiert.

Die Windungen der Drahtgewindemutter können nach dem Wickeln verbunden werden, z.B. durch Verschweissen, Verkleben oder Vergiessen. Ebenso sind Oberflächennachbehandlungen möglich, z.B. als Rostschutz, zur Beeinflussung der Gleiteigenschaft oder zur optischen Aufwertung.

Alternativ zu einer Wicklung zu einer runden Drahtspirale ist es auch möglich, die Drahtwindungen mit polygon statt rund geformten Windungen zu fertigen. Dies führt zu einer punktuell am Umfang erhöhten Reibung beim Einschrauben eines Befestigers und zu einem elastisch federnden Reibschluss. So ein schraubenklemmender Bereich erhöht die Stabilität der resultierenden Verbindung.

Figur 4 zeigt eine vereinfachte Variante einer Drahtgewindemutter 41 ohne angeformte Drehmomentstützen bzw. Flügel. Es kann fertigungstechnisch vorteilhaft oder notwendig sein, eine Drahtmutter ohne diese Flügel auf einer separaten Basisplatte 42 anzubringen. Die Befestigung kann durch Kleben, Verschweissen, Löten o.ä. erfolgen. Diese Basisplatte 42 kann seitliche Auskragungen haben, analog den Nasenvorsprüngen 14, 15 von Figur 2.

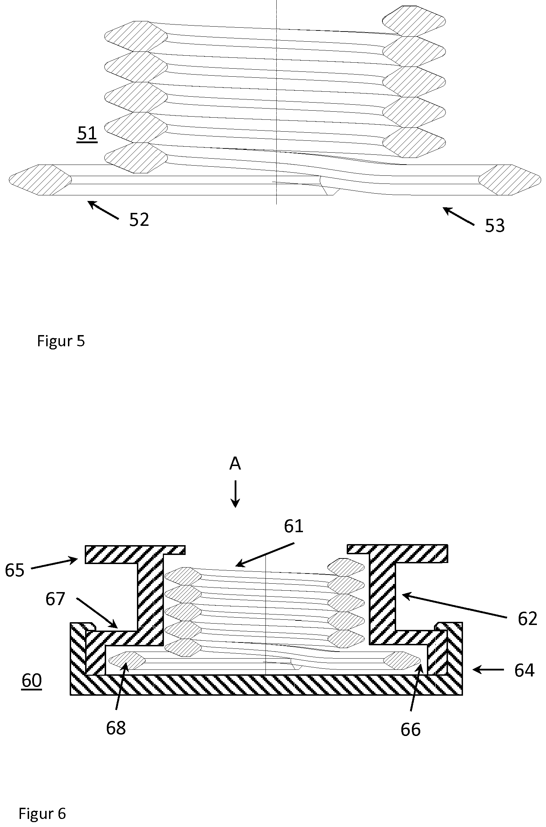

Figur 5 zeigt einen Querschnitt durch eine erfindungsgemässe Drahtgewindemutter gemäss Figur 3 mit integral aus Draht angeformten, auskragenden Drehmomentstützen. Man erkennt auch, wie die Profilierung des Drahtes sich auf die Gewindeform auswirkt. Der Vorteil dieser Ausführungsform ist, dass sie in einer entsprechend ausgelegten Fertigung in einem Stück erfolgen kann. Dies reduziert die Zahl der Rohteile, Fertigungsschritte und damit die Kosten insbesondere bei grossen Stückzahlen. Ferner bietet eine Auslegung als Drahtgewindemutter einen Gewichtsvorteil gegenüber einem Bauteil gemäss Stand der Technik.

Die Herstellung kann analog zur Fertigung von Drahtgewindeeinsätzen erfolgen, wie sie als Reparatur- und Gewinde-Verstärkungsbauteil im Stand der Technik bekannt sind.

Figur 6 zeigt eine weitere Anwendung aus dem Bereich des Fahrzeugbaus bzw. Flugzeug-Innenausbaus: Ein sogenannter Insert, ein Mutterneinsatz für ein Plattenelement bzw. Sandwichpanel. Exemplarisch gezeigt ist ein Gehäuse in zweiteiliger Ausführung mit einem winkligen ersten Teil 62, das im wesentlichen zylinderförmig ist mit einem ersten Flansch 65. Ein zweites Gehäuseteil 64 umfasst das dem Flansch 65 abgewandte Teil wie ein umschliessender Deckel. Gezeigt in Figur 6 ist ein Schnappverschluss, der eine einfache Montage des Inserts erlaubt, jedoch sind auch andere Sicherungsmöglichkeiten nicht ausgeschlossen.

Eine Drahtgewindemutter 61 wird in das erste Gehäuseteil 62 so eingelegt, dass die vorbeschriebenen Schleifen aus integral angeformten, auskragenden Drehmomentstützen, die unterbrechungsfrei aus dem Draht der Drahtmutter gebildet wurden, auf dem zweiten Flanschteil 67 aufliegen. Der übergeschobene zweite Gehäuseteil 61 bildet mit dem zweiten Flansch 67 im Insert 60 eine Hinterschneidung, die in der Art einer Ringnut 66 die Schleifen 68 sicher festhält. Im zweiten Gehäuseteil 64 wie auch am Flansch 67 können Mittel vorgesehen sein, um ein Verdrehen der Drahtgewindemutter im Gehäuse zu verhindern, die damit die Funktion der Drehmomentstütze erfüllen.
Der Insert 60 wird in ein Sackloch in einem Sandwichpanel eingebracht und dort z.B. verklebt. In Richtung A wird später ein Befestigungselement wie z.B. eine Schraube in den Insert eingeführt.

Da die Drahtmutter aufgrund ihres Aufbaus schmäler als ein tiefgezogener oder gedrehter Mutternkörper ausgeführt werden kann, lässt sich das Gehäuse des Inserts bei gleicher Funktionalität verkleinern. Das Gewinde lässt sich durch den gewickelten Aufbau exakt so fertigen, dass es die vorhandene Bauhöhe optimal ausnutzt.

### BESCHREIBUNG DER FIGUREN

Die Figuren 1 bis 3 beschreiben den Stand der Technik von Clip-Befestigungen aus einem Clipkörper 10, der zwei Schenkel 11, 12 aufweist, die über eine Platte 18 geschoben werden können. Die Öffnung des Befestigungselementes 13 wird über einem vorgesehenen Durchgangsloch in der Platte 18 positioniert. Das Befestigungselement 13 wird im Stand der Technik als Umform- oder Zerspanungs- oder zusammengesetztes Teil hergestellt.
Die Figur 3 zeigt ein Drahtmuttergewinde gemäss einer Ausführungsform der Erfindung
Die Figuren 4 und 5 zeigen Drahtgewindemuttern gemäss erfinderischen Ausführungsformen im Querschnitt.
Figur 6 zeigt einen Insert, der statt eines herkömmlichen Mutternelementes eine Drahtgewindemutter 61 aufweist.

### BEZUGSZEICHENLISTE

- 10: Clipkörper
- 11: erster Schenkel
- 12: zweiter Schenkel
- 13: Befestigungselement
- 14, 15: Nasenvorsprünge
- 16, 17: Käfig bzw. Rahmen
- 18: Platte
- 19: zylinderförmige Abschnitt
- 20: plattenförmige Basis
- 30: Drahtmutter bzw. Drahtgewindemutter
- 31: Gewindeteil
- 32,33: Flügel
- 41: Drahtgewindemutter
- 42: Basisplatte
- 51: Drahtgewindemutter
- 52, 53: Drahtschleife(n)
- 60: Insert
- 61: Drahtgewindemutter
- 62: erster Gehäuseteil
- 64: zweiter Gehäuseteil
- 65: Flansch
- 66: Ringnut
- 67: (zweiter) Flansch
- 68: Drahtschleife

## Patentansprüche

1. Leichtbaubefestiger umfassend
- einen Gewindekörper mit mindestens einer Drehmomentstütze,
- ein Gehäuse, das den Gewindekörper zumindest teilweise aufnimmt und ein Lager für die mindestens eine Drehmomentstütze aufweist
**dadurch gekennzeichnet dass** der Gewindekörper eine Drahtmutter oder Drahtgewindemutter aufweist.

2. Leichtbaubefestiger nach Anspruch 1, **dadurch gekennzeichnet, dass** das Gewinde der Drahtmutter aus einem kantig profilierten Draht aufgebaut ist, dessen Dimensionierung die Gewindemassgrössen definiert.

3. Leichtbaubefestiger nach Anspruch 1 - 2, **dadurch gekennzeichnet, dass** das Gehäuse im Wesentlichen als Köcher, Hülse bzw. Rahmen oder Käfig ausgebildet ist.

4. Leichtbaubefestiger nach Anspruch 1 - 3, **dadurch gekennzeichnet, dass** die Drahtmutter nach der Fertigung oberflächenbehandelt wird.

5. Leichtbaubefestiger nach Anspruch 1 - 4, **dadurch gekennzeichnet dass** das Gewinde der Drahtmutter Drahtwindungen mit im Querschnitt polygon geformten Windungen aufweist.

6. Leichtbaubefestiger nach Anspruch 1 - 5, **dadurch gekennzeichnet, dass** Mittel am Gehäuse vorgesehen sind, um den Befestiger an einem plattenförmigen Leichtbauelement, insbesondere einem Sandwichpanel anzubringen.

7. Leichtbaubefestiger nach Anspruch 1 - 6, **dadurch gekennzeichnet, dass** der Gewindekörper auf einer flächigen Basisplatte (42) befestigt ist und diese Basisplatte die mindestens eine Drehmomentstütze als seitliche Auskragung oder Aussparung aufweist, die mit dem Lager im Gehäuse wechselwirken kann.

8. Leichtbaubefestiger nach Anspruch 1 - 6, **dadurch gekennzeichnet, dass** die mindestens eine Drehmomentstütze als integral an die Drahtmutter (51) angeformte, auskragende Drahtschleife (52, 53) ausgebildet ist, die unterbrechungsfrei aus dem Draht der Drahtmutter (51) geformt ist.

9. Leichtbaubefestiger nach Anspruch 7 oder 8, **dadurch gekennzeichnet, dass** der Leichtbaubefestiger Bestandteil eines Clips ist mit einem Clipkörper (10), und die Mittel am Gehäuse durch zwei Schenkel (11, 12) gebildet werden zum Aufstecken / Aufschieben auf eine Platte (18).

10. Leichtbaubefestiger nach Anspruch 7 oder 8, **dadurch gekennzeichnet, dass** der Leichtbaubefestiger Bestandteil eines Inserts (60) ist, der mit seinem Gehäuse (62, 64) in einem vorgebohrten Sackloch eines Sandwichpanels verankert werden kann.
